# EUROPEAN PATENT SPECIFICATION

(11) **EP 1 892 704 B1**
(45) Date of publication and mention of the grant of the patent: **01.07.2009**
(21) Application number: 07016352.2
(22) Date of filing: 21.08.2007
(51) Int. Cl.: G11B 7/135, G11B 7/125

(54) **Spherical aberration correction device**
Vorrichtung zur Korrektur der sphärischen Aberration
Dispositif de correction d'anomalies sphériques

(30) Priority: 24.08.2006 JP 2006227900
(43) Date of publication of application: 27.02.2008
(73) Proprietor: Funai Electric Co., Ltd., Daito-shi Osaka 574-0013 (JP)
(72) Inventor: Sasabe, Mitsuyoshi, Daito-shi, Osaka 574-0013 (JP); Fujii, Hitoshi, Daito-shi, Osaka 574-0013 (JP); Nagashima, Kenji, Daito-shi, Osaka 574-0013 (JP)
(74) Representative: Beetz & Partner

(56) References cited:
- EP-A- 1 205 923
- EP-A- 1 560 209
- EP-A- 1 594 128
- WO-A-01/24174
- US-A- 5 621 717
- US-A1- 2005 025 000
- US-A1- 2007 237 054

## Description

### BACKGROUND OF THE INVENTION

### Field of the Invention

The present invention relates to a spherical aberration correcting device that is disposed in an optical system of an optical pickup device so as to correct spherical aberration that occurs in the optical system.

### Description of Related Art

Recently, an optical recording medium such as a compact disc (hereinafter referred to as a CD) or a digital versatile disc (hereinafter referred to as a DVD) has become widespread and used commonly. Furthermore, in order to increase quantity of information in the optical recording medium, study about high density of the optical recording medium has been carried on. For example, a high density optical recording medium such as a Blu-ray Disc (Registered Trademark ; hereinafter referred to as a BD) or an HD-DVD (hereinafter, these may be generically referred to as a high density optical disc) has been commercially practical.

When such an optical recording medium is read or written, it is normal to use an optical pickup device that projects a light beam to the optical recording medium so that information can be reproduced or recorded on the medium. The optical pickup device includes an objective lens and a light source, and a numerical aperture (NA) of the objective lens and a wavelength of the light source have different values in accordance with a type of the optical recording medium. For example, the NA of the objective lens is 0.50, and the wavelength of the light source is 780 nm for a CD. For a DVD, the NA of the objective lens is 0.65, and the wavelength of the light source is 650 nm. For a BD, the NA of the objective lens is 0.85, and the wavelength of the light source is 405 nm.

Since the NA of the objective lens and the wavelength have different values in accordance with a type of the optical recording medium as described above, it is considered to use different optical pickup devices for different optical recording media. However, it is more convenient to use a single optical pickup device that can read and write a plurality of types of optical recording media, and there are developed many optical pickup devices that can support compatibility with a plurality of types of optical recording media. Furthermore, among these optical pickup devices, there is an optical pickup device having a single objective lens for focusing a light beam emitted from a light source onto an optical recording medium, considering easiness in assembling and downsizing of the device.

If a single objective lens disposed in the optical pickup device supports a plurality of types of optical recording media, spherical aberration may occur in an optical system of the optical pickup device because a transparent cover layer protecting a recording layer has different thickness values in accordance with different types of the optical recording media. Therefore, the conventional method uses a spherical aberration correction element that is capable of correcting spherical aberration and is disposed in the optical pickup device so that the spherical aberration is corrected.

For example, JP-A-2003-207714 proposes an optical pickup device that can support a high density optical disc, a DVD and a CD. The optical pickup device includes an objective lens that is designed to support only the high density optical disc, a first phase correcting unit that corrects only a phase of a light beam for a DVD and allows light beams for a high density optical disc and for a CD to pass through without changing their phases, and a second phase correcting unit that corrects only a phase of the light beam for a CD and allows light beams for a high density optical disc and for a DVD to pass through without changing their phases, so that the single objective lens can support recording or reproducing information on the three types of optical discs. Note that the first and the second phase correcting units correspond to the spherical aberration correction element described above.

In addition, JP-A-2006-73076 and JP-A-2005-322301 disclose an optical pickup device that can support a high density optical disc, a DVD and a CD. The optical pickup device has a structure that works as a diffraction grating and is formed on a surface of an element having a function of restricting an aperture and is disposed in front of the objective lens. By generating diffraction light with respect to light beams having a plurality of wavelengths that pass through the element, spherical aberration can be corrected. Utilizing this, a single objective lens can support three types of optical discs in the optical pickup device. Note that JP-A-H10-92000 discloses a technique about an optical head device corresponding to the two types of optical recording media, which includes a liquid crystal hologram disposed in an optical path, and a diffracting function of the liquid crystal hologram is utilized for improving use efficiency of light so that spherical aberration can be corrected.

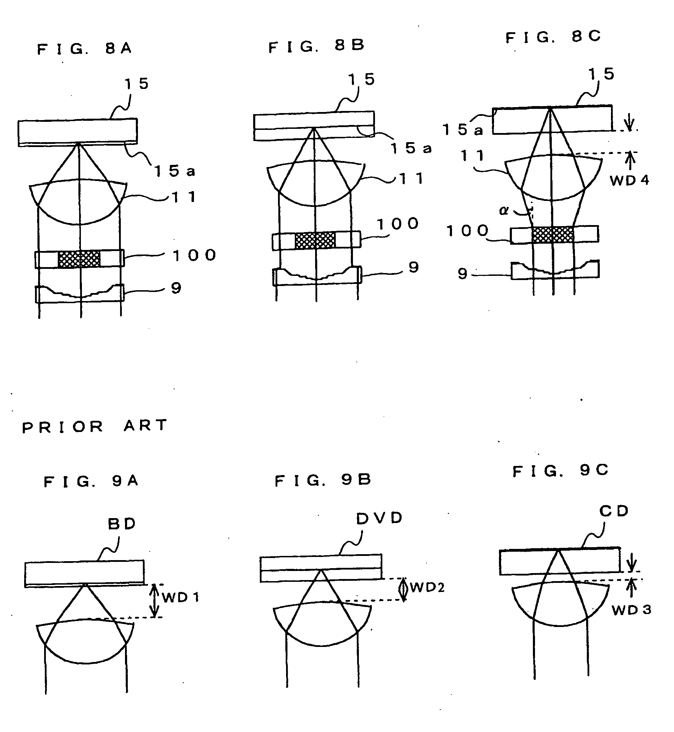

However, in the case where the spherical aberration correction element disclosed in JP-A-2003-207714 is used, and if the objective lens is adapted to a high density optical disc that needs a large numerical aperture, and if an infinity incidence structure is adopted in which the light beam emitted from each light source enters an objective lens in the state of parallel rays, in the case where a CD is reproduced in which a thickness of the transparent cover layer is large and a focal length to the recording layer is the largest, working distance WD3 that is a distance between a distal end of the objective lens and the optical recording medium becomes very short (WD1 > WD2 > WD3) as shown in Figs. 9A-9C, so that there is a problem of high probability of collision between the optical recording medium and the objective lens.

Concerning this point, if an element made of a transparent material on which a diffraction grating is formed (a spherical aberration correction element) is disposed in front of the objective lens, so that divergent light rays having a predetermined angle enter the objective lens for correcting spherical aberration as shown in JP-A-2006-73076 or JP-A-2005-322301, the working distance WD in the case where a CD is reproduced or recorded can be expanded. Therefore, it is able to solve the problem of the very short working distance WD described above, while solving the problem of spherical aberration with respect to each optical recording medium. However, in the case where a transparent member on which a diffraction grating is formed is disposed in the optical system of the optical pickup device, there is a problem that a light beam of a wavelength that is originally set to pass through the part without diffracted may cause reduction of transmittance when it passes through the part. For this reason, a problem of optical transmission efficiency of the optical pickup device occurs.

In addition, although it is able to improve optical transmission efficiency so that spherical aberration is corrected by using the liquid crystal hologram disclosed in JP-A-H10-92000, the structure disclosed in JP-A-H 10-92000 is one that supports two types of optical recording media. Therefore, in order to support three types of optical recording media or to support the case there at least one of the two types of optical recording media is two-layer recording, it is necessary to provide a plurality of liquid crystal holograms. Therefore, there is a problem that the number of components increases.

EP 1 560 209 A reflects the preamble of claim 1 as it discloses a liquid crystal optical element for correcting wavefront aberrations that can be mounted separately from an objective lens and an optical apparatus using such a liquid crystal optical element. The liquid crystal optical element includes a first transparent substrate, a second transparent substrate, a liquid crystal sealed between the first and second transparent substrates, and an electrode pattern as a region for advancing or delaying the phase of a light beam and thereby correcting wavefront aberration, wherein the region is formed smaller than the field of view of the objective lens so that the region substantially stays within the field of view of the objective lens regardless of the tracking motion of tracking means.

EP 1 594 128 A discloses an optical pick-up apparatus comprising a first light source emitting a first light flux, a second light source emitting a second light flux, a third light source emitting a third light flux, and an optical element, wherein the optical element has a first optical surface having a first area including an optical axis of the optical element, and a second area positioned outside the first area, the second area includes a light-shielding structure being capable of substantially shielding the third light flux and being capable of transmitting the first light flux and the second light flux.

EP 1 205 923 A discloses a means for correcting the spherical aberration due to variations in substrate thickness in optical discs is described. A portion of the lead-in region of an optical disc is provided with a particular pattern of pit trains. An optical disc apparatus is provided with an aberration correction element which varies the diverging or converging angle of the incoming light beam to the condenser, and control means for controlling the adjustment of the aberration correction element. The aberration correction element is controlled to minimize the difference in amplitude due to focus offset amounts.

### SUMMARY OF THE INVENTION

An object of the present invention is to provide a spherical aberration correcting device that is capable of improving optical transmission efficiency of the optical pickup device that supports a plurality of types of optical recording media, suppressing increase of the number of components disposed in the optical system, and reducing probability of collision between the objective lens and the optical recording medium, and that can correct spherical aberration generated in the optical system.

A spherical aberration correcting device of the present invention is disposed in an optical system of an optical pickup device that supports at least a first optical recording medium and a second optical recording medium having larger working numerical aperture than the first optical recording medium has, so as to correct spherical aberration. The spherical aberration correcting device includes a first region that has a function of converting a first light beam that is used for the first optical recording medium into diverging light rays having a predetermined angle of divergence, and a second region that is formed so as to surround the first region and has a function of changing phase distribution of a second light beam that is used for the second optical recording medium when the second light beam enters the second region. The functions of the first region and the second region can be turned on and off electrically.

According to this structure, the spherical aberration correcting device includes the first region that enables correction of spherical aberration for the first light beam that is used for the first optical recording medium, the second region that enables correction of spherical aberration for the second light beam that is used for the second optical recording medium, and the functions of the first region and the second region can be controlled to be turned on and off. Therefore, unnecessary decrease of optical transmittance of the light beam that passes through the spherical aberration correcting device can be prevented by turning off the functions of the first region and the second region, if necessary. Therefore, if this spherical aberration correcting device is provided to the optical pickup device, optical transmission efficiency in the optical pickup device can be improved.

In addition, since the single spherical aberration correcting device can correct spherical aberration with respect to two types of light beams, increase of the number of components disposed in the optical system of the optical pickup device can be suppressed. Furthermore, a method for correcting spherical aberration in the inside region among two spherical aberration correction regions provided to the spherical aberration correcting device is to allow diverging light rays having a predetermined angle to enter the objective lens so that spherical aberration can be canceled. For this reason, it is disposed in an optical pickup device that supports at least a BD and a CD. When a CD is recorded or reproduced that is set to have a small effective diameter and a far focal point, a working distance (WD) that is a distance between the distal end of the objective lens and the optical recording medium can be increased compared with the case where spherical aberration is corrected by changing phase distribution of the light beam. Therefore, if the spherical aberration correcting device of the present invention is used, the working distance WD of the objective lens can be increased so that possibility of collision between the objective lens and the optical recording medium can be reduced.

In addition, according to another aspect of the present invention, the spherical aberration correcting device having the structure described above is made up of a liquid crystal element including liquid crystal, and first and second transparent electrodes that sandwich the liquid crystal, and an electrode pattern of at least one of the first and the second transparent electrodes includes two types of patterns so that the first region and the second region are formed.

According to this structure, the structure for turning on and off the functions of the two spherical aberration correction regions electrically is achieved by the liquid crystal element, so it can be realized easily.

In addition, according to another aspect of the present invention, as to the spherical aberration correcting device having the structure described above, the electrode pattern in the first region is a concentric interference pattern, so that the first light beam is diffracted and converted into the diverging light rays when voltage is applied between the first transparent electrode and the second transparent electrode, and the electrode pattern in the second region has a plurality of concentric regions, and applied voltage applied between the first transparent electrode and the second transparent electrode can be adjusted in each of the plurality of regions, so that phase distribution of the second light beam can be changed by the adjustment of the applied voltage.

According to this structure, it is able to realize the structure easily that is provided with the region for correcting spherical aberration by allowing diverging light rays having a predetermined angle to enter the objective lens, and the region for correcting spherical aberration by changing phase distribution of the light beam.

### BRIEF DESCRIPTION OF THE DRAWINGS

Fig. 1 is a cross sectional view showing a structure of an embodiment of a spherical aberration correcting device according to the present invention.
Fig. 2A is a plan view of the spherical aberration correcting device shown in Fig. 1, viewed from the bottom.
Fig. 2B is a plan view of the spherical aberration correcting device shown in Fig. 1, viewed from the top.
Fig. 3A is a diagram showing a structure of a first region of the spherical aberration correcting device according to the present embodiment, which is a plan view of the first region viewed from a second transparent electrode side.
Fig. 3B is a diagram showing a structure of the first region of the spherical aberration correcting device according to the present embodiment, which is a cross sectional view cut along the line A-A in Fig. 3A
Fig. 4 is a schematic diagram showing a situation in which a light beam entering the spherical aberration correcting device of the present embodiment is diffracted to be diverging light rays when it goes out.
Fig. 5A is an explanatory diagram for explaining correction of spherical aberration that is performed by using a second region of the spherical aberration correcting device of the present embodiment.
Fig. 5B is an explanatory diagram for explaining correction of spherical aberration that is performed by using a second region of the spherical aberration correcting device of the present embodiment.
Fig. 6 is a schematic diagram showing a structure of an optical system of an optical pickup device that supports a BD, a DVD and a CD according to the present embodiment.
Fig. 7A is a schematic plan view showing a structure of a phase shift element that is provided to the optical pickup device of the present embodiment.
Fig. 7B is a cross sectional view cut along the line B-B in Fig. 7A.
Fig. 8A is a diagram showing a state where the light beam is condensed on the optical recording medium in the optical pickup device of the present embodiment, which shows a case where the optical recording medium is a BD.
Fig. 8B is a diagram showing a state where the light beam is condensed on the optical recording medium in the optical pickup device of the present embodiment, which shows a case where the optical recording medium is a DVD.
Fig. 8C is a diagram showing a state where the light beam is condensed on the optical recording medium in the optical pickup device of the present embodiment, which shows a case where the optical recording medium is a CD.
Fig. 9A is a diagram for explaining a problem in the case where a conventional spherical aberration correction element is used.
Fig. 9B is a diagram for explaining a problem in the case where a conventional spherical aberration correction element is used.
Fig. 9C is a diagram for explaining a problem in the case where a conventional spherical aberration correction element is used.

### DETAILED DESCRIPTION OF THE PREFERRED EMBODIMENTS

Hereinafter, an embodiment of the present invention will be described in detail with reference to the attached drawings. However, the embodiment described here is merely an example, and the present invention is not limited to the embodiment described here.

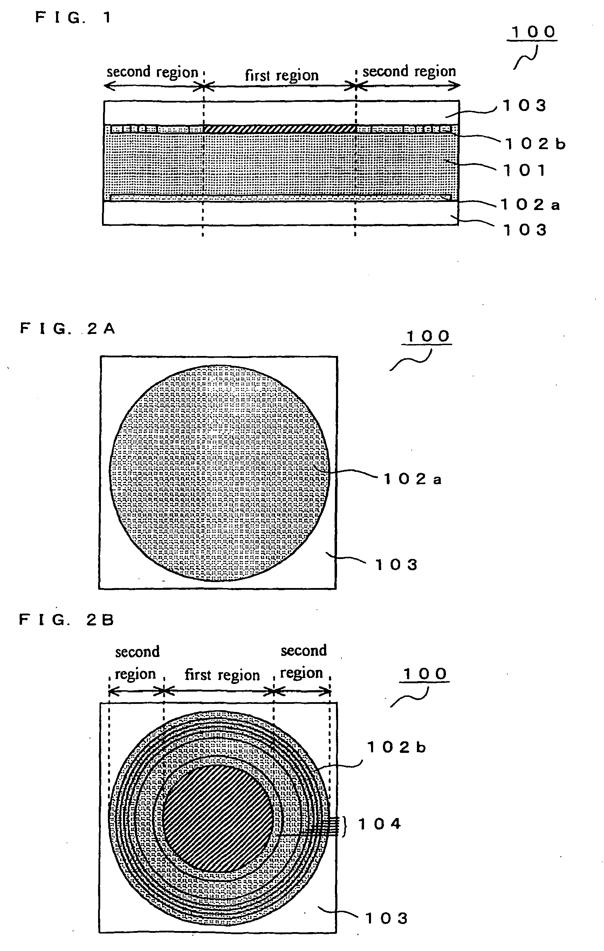

Fig. 1 is a cross section showing a structure of a spherical aberration correcting device according to an embodiment of the present invention. In addition, Figs. 2A and 2B are plan views showing a structure of the spherical aberration correcting device according to the embodiment of the present invention. Fig. 2A shows it viewed from the bottom in Fig. 1, while Fig. 2B shows it viewed from the top in Fig. 1. Note that the spherical aberration correcting device 100 of the present embodiment has two regions including a first region and a second region having different functions as described later. However, in Figs. 1 and 2B, a detail pattern of a second transparent electrode 102b in the first region is omitted.

As shown in Figs. 1, 2A and 2B, the spherical aberration correcting device 100 of the present embodiment includes a liquid crystal 101, a first transparent electrode 102a and the second transparent electrode 102b that are arranged to sandwich the liquid crystal 101, two transparent substrates 103 that sandwich a portion made up of the liquid crystal 101 and the transparent electrodes 102a and 102b. The liquid crystal 101 is made of nematic liquid crystal or the like, for example, and its orientation direction changes when voltage is applied across the transparent electrodes 102a and 102b. The transparent electrodes 102a and 102b are made of ITO (indium-tin oxide), for example, and have a function of applying voltage to the liquid crystal 101. The transparent substrate 103 is made of glass or the like, for example, and has a function of supporting the transparent electrodes 102a and 102b.

Among the transparent electrodes 102a and 102b, the first transparent electrode 102a is made up of one electrode without being patterned and works as a common electrode as shown in Fig. 2A. In contrast, the second transparent electrode 102b has two types of electrode patterns that will be described later in detail, so that the spherical aberration correcting device 100 includes the first region and the second region that have different functions.

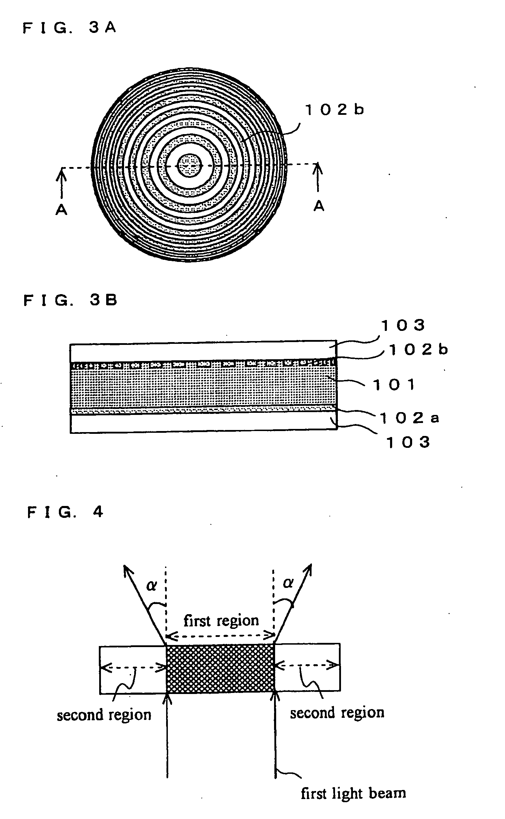

Hereinafter, structure and actions of the first region and the second region of the spherical aberration correcting device 100 will be described. First, the first region will be described with reference to Figs. 3A and 3B. Fig. 3A is a diagram showing a structure of the first region of the spherical aberration correcting device 100 in the present embodiment, which is a plan view of the first region viewed from the second transparent electrode 102b side. Fig. 3B is a cross section cut along the line A-A in Fig. 3A.

As shown in Fig. 3A, the second transparent electrode 102b disposed in the first region has an electrode pattern that is a concentric interference pattern. Furthermore, the liquid crystal 101 has a refractive index (no) that is uniform in the whole region of the first region when voltage is not applied between the first transparent electrode 102a and the second transparent electrode 102b, and it has orientation that does not affect a light beam that passes through it.

Therefore, if voltage is not applied between the first transparent electrode 102a and the second transparent electrode 102b, the light beam passes through the first region without affected by it. In contrast, if voltage is applied between the electrodes, the liquid crystal 101 between the first transparent electrode 102a and the second transparent electrode 102b (see Fig. 3B) changes its orientation direction so that a refractive index at the position changes (from no to n₁). Therefore, parts having a refractive index of no and parts having a refractive index of n₁ are formed alternately in a concentric manner in the first region, so that the first region diffracts the incident light beam to generate diverging light rays (e.g., +1st order light) as shown in Fig. 4.

Note that Fig. 4 is a schematic diagram showing a situation in which a light beam entering the spherical aberration correcting device 100 of the present embodiment is diffracted to be diverging light rays when it goes out. In addition, although a detail structure thereof is not shown, the second transparent electrode 102b in the first region is the same potential uniformly and is connected to a driving circuit (not shown) for the spherical aberration correcting device 100 via a single lead wire.
In addition, the first transparent electrode 102a that works as a common electrode is also connected to the above-mentioned driving circuit via a single lead wire.

The concentric interference pattern of the second transparent electrode 102b in the first region is formed so as to produce diverging light rays having a predetermined angle of divergence α (see Fig. 4) when a first light beam that is used for a first optical recording medium enters it. Thus, it can correct spherical aberration that may occur in the first light beam.

This concentric interference pattern of the second transparent electrode 102b is, for example, the same as a pattern generated by interference between a first light beam that is emitted from a light source of the optical pickup device and enters the spherical aberration correcting device 100 and converging light rays that enters the spherical aberration correcting device 100 after emitted by the spherical aberration correcting device 100 as diverging light rays having a predetermined angle of divergence α and is condensed by the objective lens on the optical recording medium and then is reflected by the first optical recording medium and passes through the objective lens, on the surface on which the second transparent electrode 102b of the transparent substrate 103 is formed. Considering this point, the interference pattern is formed.

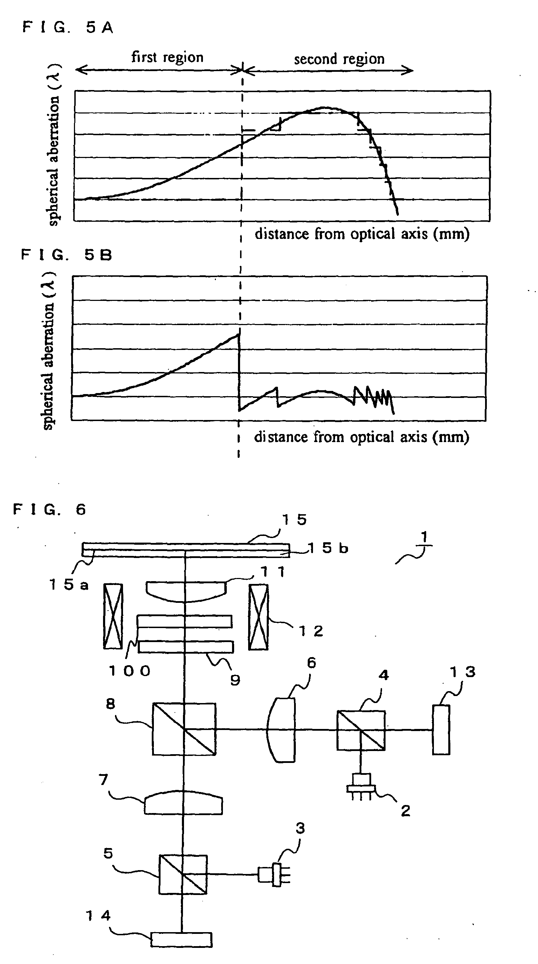

Next, the second region of the spherical aberration correcting device 100 will be described with reference to Figs. 1, 2A, 2B, 5A and 5B. Note that Figs. 5A and 5B are explanatory diagrams for explaining spherical aberration correction performed by using the second region of the spherical aberration correcting device 100, and detail thereof will be described later.

As shown in Fig. 2B, the second region is formed to surround the first region. In other words, the second region is used for correcting spherical aberration that may occur in a second light beam that is used for a second optical recording medium having a larger working numerical aperture than the first optical recording medium has (the second light beam having a larger effective diameter than the first light beam has).

In the second region, the electrode pattern of the second transparent electrode 102b is formed so as to have a plurality of concentric regions. The concentric regions are separated from each other so that they don't contact each other (black circle portions in Fig. 2B correspond to gaps between them so that they don't contact each other). In addition, the plurality of regions are connected to lead wires 104, respectively, so that potentials can be applied to the plurality of regions independently. Note that the lead wires 104 are connected to a driving circuit (not shown) for the spherical aberration correcting device 100. In addition, if the same potential can be applied always to some regions among the plurality of regions, the lead wires 104 connected to the regions to which the same potential is applied can be made together into one lead wire that is connected to the above-mentioned driving circuit.

In the second region too, similarly to the case of the first region, the liquid crystal 101 has a uniform refractive index (no) in the whole region of the second region if voltage is not applied between the first transparent electrode 102a and the second transparent electrode 102b, and it has an orientation such that a light beam that passes through is not affected. Therefore, if voltage is not applied between the first transparent electrode 102a and the second transparent electrode 102b, the light beam passes through the second region without affected by it. In contrast, if voltage is applied between the electrodes, the liquid crystal 101 between the first transparent electrode 102a and the second transparent electrode 102b (see Fig. 1) changes its orientation direction so that a refractive index at the position changes.

Since the second transparent electrode 102b is formed to have a plurality of concentric regions in the second region as described above so that potential can be applied to each of the regions (concentric regions) independently, voltage that is applied between the first transparent electrode 102a and the second transparent electrode 102b can be adjusted in each of the concentric regions, so that a refractive index of the liquid crystal 102 can be controlled in each of the regions (concentric regions).

Fig. 5A shows spherical aberration that may occur in the second light beam (shown by the solid line) when the optical pickup device reproduces the second optical recording medium. As shown in Fig. 5A, the spherical aberration increases at the rim side that is away from the optical axis. Therefore, if the large spherical aberration that occurs at the rim side is corrected mainly, deterioration of reproduction quality due to the spherical aberration can be suppressed. Therefore, the plurality of concentric regions formed as the pattern of the second transparent electrode 102b in the second region is designed to have the number of regions and their areas so that spherical aberration increasing at the rim side can be corrected appropriately.

Then, using the plurality of concentric regions having the number of regions and their areas designed as described above, applied voltages to be applied to the individual regions are adjusted so that spherical aberration that may occur in the second light beam can be corrected. The phase shift pattern in this case is the pattern shown by the dashed dotted line in Fig. 5A. Note that voltage is not applied between the first transparent electrode 102a and the second transparent electrode 102b in the first region. In addition, the phase shift pattern to be generated in the plurality of concentric regions is actually required to generate a negative value having the same absolute value as the pattern shown in Fig. 5A, but Fig. 5A does not show a negative value for convenience sake.

Fig. 5B shows a result of subtracting the phase shift pattern (shown by the dashed dotted line) from the spherical aberration (shown by the solid line) in Fig. 5A. As understood from Fig. 5B, if the second light beam is corrected to change its phase distribution at a part corresponding to the second region, spherical aberration can be corrected. Note that sizes of the first region and the second region are determined appropriately considering effective diameters of light beams for which spherical aberration is corrected in each of the regions and a situation of the spherical aberration that varies depending on design of the objective lens.

Although the spherical aberration correcting device 100 described above exerts the spherical aberration correction function in the first region and the second region when voltage is applied between the transparent electrodes 102a and 102b, the present invention is not limited to this structure. It is possible to adopt another structure in which spherical aberration is corrected when voltage is not applied between the transparent electrodes 102a and 102b, while it does not exert the spherical aberration correction function when voltage is applied between the transparent electrodes 102a and 102b.

In addition, although the first transparent electrode 102a is the common electrode in the embodiment described above, it is possible to adopt another structure in which the first transparent electrode 102a has the same electrode pattern as the second transparent electrode 102b has. In this case too, the same effect as described above can be obtained.

Next, effects of the spherical aberration correcting device of the present invention will be described further in detail, with reference to an example of a case where the spherical aberration correcting device 100 is disposed in an optical system of an optical pickup device that can support a BD, a DVD and a CD. Fig. 6 is a schematic diagram showing a structure of an optical system of an optical pickup device according to an embodiment that can support a BD, a DVD and a CD.

An optical pickup device 1 includes a first light source 2 of a two-wavelength integral-type that can emit a light beam of 780 nm band for a CD and a light beam of 650 nm band for a DVD, a second light source 3 that can emit a light beam of 405 nm band for a BD, a first beam splitter 4 and a second beam splitter 5 that reflect light beams emitted from the light sources 2 and 3, respectively, and allow reflection light from an optical recording medium 15 (a CD, a DVD or a BD) to pass through so as to lead it to photodetectors 13 and 14, a first collimator lens 6 and a second collimator lens 7 that converts an incident light beam into parallel rays, a dichroic prism 8 that reflects the light beams for a CD and for a DVD and allows the light beam for a BD to pass through, a phase shift element 9 that changes phase distribution of the light beam for a DVD so that spherical aberration can be corrected and allows the light beams for a CD and for a BD to pass through without any action though its detailed structure will be described later, a spherical aberration correcting device 100 that corrects spherical aberration of the light beams for a CD and for a BD and does not affect the light beam for a DVD by on and off control of its function, an objective lens 11 that condenses the incident light beam onto a recording surface 15a of the optical recording medium 15, the first photodetector 13 that receives the reflection light from the CD or the DVD (optical recording medium) 15 and converts it into an electric signal, and the second photodetector 14 that receives the reflection light from the BD (optical recording medium) 15 and converts it into an electric signal.

Note that the objective lens 11 is designed to be optimal for reading or writing information on a BD in the optical pickup device 1. Therefore, spherical aberration may occur when information is reproduced or recorded on a DVD or a CD that are the optical recording media 15 having different thicknesses of the transparent cover layer 15b. Therefore, it is necessary to design so that the optical pickup device 1 can correct spherical aberration when information is read from a DVD or a CD. In addition, since a BD has a large influence of spherical aberration that may occur due to a variation of a thickness of the transparent cover layer 15b or the like, it is preferable that a correction value of the spherical aberration can be changed if necessary. Considering this point, the optical pickup device 1 is designed.

The objective lens 11, the spherical aberration correcting device 100 and the phase shift element 9 are mounted on an actuator 12 that drives the objective lens 11 at least in a focus direction and in a tracking direction so that they can be driven as one unit. Such a structure of the actuator 12 is known as a structure of drive utilizing electromagnetic force between a permanent magnet and a coil, so detail description thereof will be omitted here. Note that a reason why they are driven as one unit is to reduce an influence of coma aberration that may increase if only the objective lens 11 is driven solely.

A structure of the spherical aberration correcting device 100 disposed in the optical pickup device is the same as the above-mentioned structure, in which the first region (see Fig. 1) is formed so that the light beam for a CD is diffracted to be diverging light rays having a predetermined angle of divergence α, so that spherical aberration can be corrected, and the second region (see Fig. 1) controls phase distribution of the light beam for a BD so that spherical aberration can be corrected. Note that a BD requires a larger numerical aperture than a CD does, the effective diameter of the light beam for a BD is larger than that of the light beam for a CD. Therefore, it is able to correct spherical aberration that may occur in the light beams for a BD and for a CD by using the spherical aberration correcting device 100.

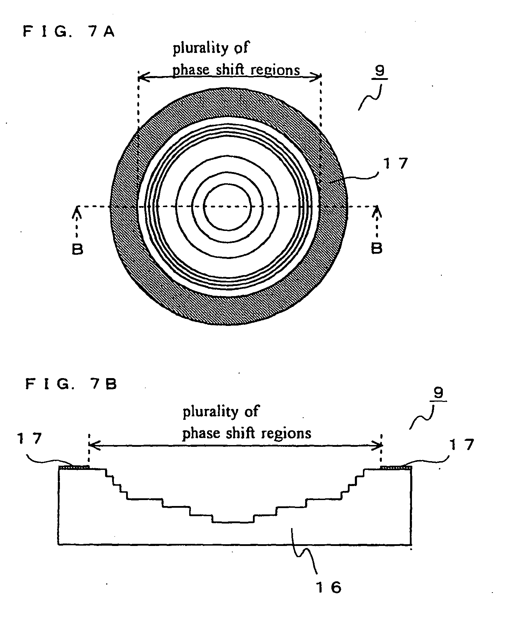

Next, the phase shift element 9 will be described with reference to Figs. 7A and 7B. Note that Fig. 7A is a schematic plan view showing a structure of the phase shift element 9, and Fig. 7B is a cross sectional view of the same cut along the line B-B in Fig. 7A.

As shown in Fig. 7A, a plurality of phase shift regions are formed in a concentric manner on the phase shift element 9. The plurality of phase shift regions are made up of steps formed on a transparent substrate 16 as shown in Fig. 7B, and a thickness of the transparent substrate 16 is adjusted with each of them. Therefore, a light beam that passes through the phase shift element 9 has a change of phase distribution caused by a difference of passing time through the transparent substrate 16 among the individual phase shift regions.

A pattern of the phase shift regions of the phase shift element 9 (widths thereof and thicknesses of the transparent substrate 16) is determined so that quantity of spherical aberration generated in the light beam for a DVD that is studied in advance can be corrected. Note that when the light beam for a BD or the light beam for a CD passes through the phase shift element 9, it is inconvenient if the phase distribution of the light beam changes. Therefore, for example, quantity of phase shift generated between neighboring phase shift regions is adjusted to be substantially integer times the wavelength of each of the light beams. Having the structure described above, the phase shift element 9 changes phase distribution of only the light beam for a DVD and does not affect light beams for a BD and for a CD.

In addition, the phase shift element 9 is provided with a aperture restricting portion 17 so that aperture restriction can be performed at the rim portion where the phase shift region is not formed with respect to the light beam for a DVD. This aperture restricting portion 17 is realized by, for example, a structure of attaching a dichroic mirror that allows the light beam for a BD to pass through and reflects the light beam for a DVD, or a structure of forming a diffraction region that diffracts only the light beam for a DVD and allows the light beam for a BD to pass through. Note that as to the light beam for a CD, the aperture restriction may be or may not be performed.

Furthermore, although the phase shift element 9 is provided with the aperture restricting portion 17 in the present embodiment, it is possible to adopt another structure in which a filter for the aperture restriction is provided separately from the phase shift element 9.

An operation of the optical pickup device 1 having the structure described above when it performs reading or writing information on a BD, a DVD or a CD will be described with reference to Figs. 6, 8A, 8B and 8C mainly. Note that Figs. 8A-8C are diagrams showing situations when the light beam is condensed on the optical recording medium 15. Fig. 8A shows the case where the optical recording medium 15 is a BD, Fig. 8B shows the case where the optical recording medium 15 is a DVD, and Fig. 8C shows the case where the optical recording medium 15 is a CD.

When the light beam for a BD is emitted from the second light source 3, it passes through the second beam splitter 5, the second collimator lens 7 and the dichroic prism 8 in this order and enters the phase shift element 9 as parallel rays as shown in Fig. 8A. Note that the aperture restriction is performed for the light beam entering the phase shift element 9 by an aperture formed in the substrate (not shown) of the actuator 12.

As described above, since the phase shift element 9 does not affect the light beam for a BD, the light beam passes through the phase shift element 9 and enters the spherical aberration correcting device 100. When the light beam for a BD enters the spherical aberration correcting device 100, voltage is not applied between the transparent electrodes 102a and 102b in the first region, but a predetermined voltage is applied only in the second region between the transparent electrodes 102a and 102b. Thus, the diffraction function in the first region is turned off, while only a function of controlling phase distribution in the second region is turned on. Therefore, it is able to change phase distribution of the light beam for a BD so that spherical aberration can be corrected.

The light beam after its phase distribution is changed by the spherical aberration correcting device 100 is condensed on the optical recording medium (BD) 15 by the objective lens 11. The light beam is reflected by the optical recording medium 15 and returns along the same optical path as the going path so as to enter the second beam splitter 5. Then, it passes through the second beam splitter 5 and is condensed on the second photodetector 14.

Furthermore, although the function of the first region is turned off when the light beam for a BD enters the spherical aberration correcting device 100 in the structure described above, it is possible to adopt another structure in which spherical aberration that occurred in the light beam for a BD is corrected in the state where the function of the first region is turned on.

When the light beam for a DVD is emitted from the first light source 2, it passes through the first beam splitter 4, the first collimator lens 6 and the dichroic prism 8 in this order and enters the phase shift element 9 as the parallel rays as shown in Fig. 8B. Note that aperture restriction of the light beam that enters the phase shift element 9 is performed by the aperture that is formed in the substrate (not shown) of the actuator 12.

As described above, the plurality of phase shift regions are formed in the phase shift element 9 so as to correct spherical aberration that may occur in the light beam for a DVD, so that phase correction of the light beam for a DVD is performed.
In addition, since the aperture restricting portion 17 is formed in the phase shift element 9 for aperture restriction of the light beam for a DVD, aperture restriction of the light beam for a DVD is performed corresponding to the aperture restricting portion 17.

The light beam after the phase correction and the aperture restriction are performed by the phase shift element 9 enters the spherical aberration correcting device 100. When the light beam for a DVD enters the spherical aberration correcting device 100, the function of the first region and the second region of the spherical aberration correcting device 100 is turned off (in the state where voltage is not applied between the transparent electrodes 102a and 102b), so the light beam passes through it without affected. In other words, optical transmittance of the light beam for a DVD is not reduced substantially by the spherical aberration correcting device 100.

The light beam after passing through the spherical aberration correcting device 100 is condensed on the optical recording medium (DVD) 15 by the objective lens 11. The light beam is reflected by the optical recording medium 15 and returns along the same optical path as the going path so as to enter the first beam splitter 4. Then, it passes through the first beam splitter 4 and is condensed on the first photodetector 13.

When the light beam for a CD is emitted from the first light source 2, it passes through the first beam splitter 4, the first collimator lens 6 and the dichroic prism 8 in this order and enters the phase shift element 9 as the parallel rays as shown in Fig. 8C. Note that aperture restriction of the light beam that enters the phase shift element 9 is performed by the aperture that is formed in the substrate (not shown) of the actuator 12.

As described above, since the phase shift element 9 does not affect the light beam for a CD, it passes through the phase shift element 9 and enters the spherical aberration correcting device 100. When the light beam for a CD enters the spherical aberration correcting device 100, voltage is not applied between the transparent electrodes 102a and 102b in the second region, but a predetermined voltage is applied only in the first region between the transparent electrodes 102a and 102b. Thus, the phase shift function of the second region is turned off, while only the diffraction function of the first region is turned on. Therefore, when the light beam for a CD passes through the spherical aberration correcting device 100, it becomes diverging light rays having a predetermined angle of divergence α. Thus, it is able to cancel spherical aberration that may occur when the light beam passes through the objective lens 11 and reaches the optical recording medium (CD) 15. The light beam is reflected by the optical recording medium 15 and returns along the same optical path as the going path so as to enter the first beam splitter 4. Then, it passes through the first beam splitter 4 and is condensed on the first photodetector 13.

In this way, the light beam entering the objective lens 11 is converted into the diverging light rays so that spherical aberration is corrected. In this case, a working distance WD4 that is a distance between the distal end of the objective lens 11 and the optical recording medium 15 (see Fig. 8C) can be increased compared with the case where spherical aberration is corrected by changing the phase distribution of the light beam like the conventional method (WD4 > WD3; see Figs. 8C and 9C). Therefore, it is able to reduce probability of collision between the objective lens 11 and the optical recording medium 15.

Note that the optical pickup device 1 described above does not have a structure in which aperture restriction that is suitable for the working numerical aperture of a CD is performed with respect to the light beam for a CD. In this case, components of peripheral portions of the light beam expand as flare components and are not focused. However, in order to secure quality in reproducing and recording information on a CD even in such a situation, aperture restriction is not provided specially considering increase of the number of components. However, it is no problem to provide an additional element for aperture restriction of the light beam for a CD. Note that Fig. 8C shows only a part of the light beam corresponding to the effective diameter for convenience sake.

In addition, although the light beam for a DVD or for a CD that enters the phase shift element 9 is converted into parallel rays in the optical pickup device 1 described above, it is possible to adopt another structure in which the light beam enters as diverging light rays or the like by adjusting a position of the first collimator lens 6, for example. In this case, since there is possibility that coma aberration occurs, it is necessary to be cautious with an angle of divergence. It is considered to provide a tilting correction function to the actuator 12 for supporting the case.

As described above, since the spherical aberration correcting device of the present invention can turn on and off its function, optical transmission efficiency of the optical pickup device can be improved if the spherical aberration correcting device of the present invention is provided to the optical pickup device. In addition, it is possible to reduce possibility of collision between the optical recording medium and the objective lens in the optical pickup device that can support a plurality of optical recording media including an optical recording medium that requires an especially large numerical aperture. In addition, since the spherical aberration correcting device of the present invention can correct spherical aberration of two types of light beams, the number of components necessary for correcting spherical aberration can be reduced.

Although the above description shows the case where the spherical aberration correcting device of the present invention is provided to the optical pickup device that can support a BD, a DVD and a CD, the spherical aberration correcting device of the present invention can be applied to other optical pickup devices that can support other types of the optical recording media. In addition, the spherical aberration correcting device of the present invention can be applied to an optical pickup device that can support two types of optical recording media including a BD and a CD, for example, without limiting to the optical pickup device that can support three types of optical recording media.

The spherical aberration correcting device of the present invention is useful for an optical pickup device that can support a plurality of types of optical recording media. Therefore, it can be used widely in a realm of an optical disc apparatus or the like.

## Claims

1. A spherical aberration correcting device disposed in an optical system of an optical pickup device (1) that supports at least a first optical recording medium (15) and a second optical recording medium (15) having larger working numerical aperture than the first optical recording medium (15) has, so as to correct spherical aberration, the spherical aberration correcting device (100) wherein the functions of the first region and the second region can be turned on and off electrically; said spherical aberration. correction device **characterized by**
a first region that has a function of converting a first light beam that is used for the first optical recording medium (15) into diverging light rays having a predetermined angle of divergence; and
a second region that is formed so as to surround the first region and has a function of changing phase distribution of a second light beam that is used for the second optical recording medium (15) when the second light beam enters the second region.

2. The spherical aberration correcting device according to claim 1, wherein
the spherical aberration correcting device (100) is made up of a liquid crystal element including liquid crystal (101), and first and second transparent electrodes (102a, 102b) that sandwich the liquid crystal (101), and
an electrode pattern of at least one of the first and the second transparent electrodes (102a, 102b) includes two types of patterns so that the first region and the second region are formed.

3. The spherical aberration correcting device according to claim 2, wherein
the electrode pattern in the first region is a concentric interference pattern, so that the first light beam is diffracted and converted into the diverging light rays when voltage is applied between the first transparent electrode (102a) and the second transparent electrode (102b), and
the electrode pattern in the second region has a plurality of concentric regions, and applied voltage applied between the first transparent electrode (102a) and the second transparent electrode (102b) can be adjusted in each of the plurality of regions, so that phase distribution of the second light beam can be changed by the adjustment of the applied voltage.

## Patentansprüche

1. Vorrichtung zur Korrektur der sphärischen Aberration, die in einem optischen System eines optischen Aufnehmers (1) angeordnet ist, welcher zumindest ein erstes optisches Aufzeichnungsmedium (15) und ein zweites optisches Aufzeichnungsmedium (15) mit einer größeren numerischen Arbeitsapertur als das erste optische Aufzeichnungsmedium (15) unterstützt, um die sphärische Aberration zu korrigieren, wobei die Funktionen des ersten Bereichs und des zweiten Bereichs elektrisch ein- und ausgeschaltet werden können; wobei die Vorrichtung zur Korrektur der sphärischen Aberration (100) **gekennzeichnet ist durch**
einen ersten Bereich, der eine Funktion zur Umwandlung eines ersten Lichtstrahls, welcher für das erste optische Aufzeichnungsmedium (15) eingesetzt wird, in divergierende Lichtstrahlen mit einem vorgegebenen Divergenzwinkel aufweist; und
einen zweiten Bereich, der so ausgebildet ist, dass er den ersten Bereich umgibt und eine Funktion zur Änderung der Phasenverteilung eines zweiten Lichtstrahls, welcher für das zweite optische Aufzeichnungsmedium (15) eingesetzt wird, aufweist, wenn der zweite Lichtstrahl in den zweiten Bereich eintritt.

2. Vorrichtung zur Korrektur der sphärischen Aberration nach Anspruch 1, wobei
die Vorrichtung zur Korrektur der sphärischen Aberration (100) aus einem Flüssigkristallelement einschließlich eines Flüssigkristalls (101) sowie einer ersten und zweiten transparenten Elektrode (102a, 102b), die den Flüssigkristall (101) sandwichartig einschließen, besteht, und
ein Elektrodenmuster von zumindest einer von der ersten und der zweiten transparenten Elektrode (102a, 102b) zwei Arten von Mustern einschließt, so dass der erste Bereich und der zweite Bereich ausgebildet werden.

3. Vorrichtung zur Korrektur der sphärischen Aberration nach Anspruch 2, wobei
das Elektrodenmuster im ersten Bereich ein konzentrisches Interferenzmuster ist, so dass der erste Lichtstrahl gebeugt und in die divergierenden Lichtstrahlen umgewandelt wird, wenn Spannung zwischen der ersten transparenten Elektrode (102a) und der zweiten transparenten Elektrode (102b) angelegt wird, und
das Elektrodenmuster im zweiten Bereich mehrere konzentrische Bereiche aufweist und eine angelegte Spannung, die zwischen der ersten transparenten Elektrode (102a) und der zweiten transparenten Elektrode (102b) angelegt ist, in jedem der mehreren Bereiche eingestellt werden kann, so dass eine Phasenverteilung des zweiten Lichtstrahls durch die Einstellung der angelegten Spannung geändert werden kann.

## Revendications

1. Dispositif de correction d'aberrations sphériques disposé dans un système optique d'un dispositif de capteur optique (1) qui supporte au moins un premier support d'enregistrement optique (15) et un second support d'enregistrement optique (15) possédant une ouverture numérique utile plus grande que celle du premier support d'enregistrement optique (15) afin de corriger une aberration sphérique ; dans le dispositif de correction d'aberrations sphériques (100), les fonctions de la première zone et de la seconde zone peuvent être activées et désactivées électriquement ; ledit dispositif de correction d'aberrations sphériques étant **caractérisé par**
une première zone qui possède une fonction de conversion d'un premier faisceau lumineux qui est utilisé pour le premier support d'enregistrement optique (15) en rayons lumineux divergents ayant un angle de divergence défini au préalable ; et
une seconde zone qui est formée afin d'entourer la première zone et qui possède une fonction de modification de la distribution de phase d'un second faisceau lumineux qui est utilisé pour le second support d'enregistrement optique (15) quand le second faisceau lumineux entre dans la seconde zone.

2. Le dispositif de correction d'aberrations sphériques selon la revendication 1, dans lequel
le dispositif de correction d'aberrations sphériques (100) est constitué d'un élément à cristaux liquides incluant des cristaux liquides (101) et d'une première et une seconde électrodes transparentes (102a, 102b) qui prennent en sandwich les cristaux liquides (101), et
un motif d'électrode composé au moins de la première et/ou la seconde électrode transparente (102a, 102b) inclut deux types de motifs afin que la première zone et la seconde zone soient formées.

3. Le dispositif de correction d'aberrations sphériques selon la revendication 2, dans lequel
le motif d'électrode dans la première zone est un motif d'interférence concentrique afin que le premier faisceau lumineux soit diffracté et converti en rayons lumineux divergents quand une tension est appliquée entre la première électrode transparente (102a) et la seconde électrode transparente (102b), et
le motif d'électrode dans la seconde zone possède une pluralité de zones concentriques et la tension appliquée entre la première électrode transparente (102a) et la seconde électrode transparente (102b) peut être ajustée dans chacune des zones afin que la distribution de phase du second faisceau lumineux puisse être modifiée par l'ajustement de la tension appliquée.
